# FASCICULE DE BREVET EUROPEEN

(11) **EP 4 048 549 B1**
(45) Date de publication et mention de la délivrance du brevet: **08.04.2026**
(21) Numéro de dépôt: 20789065.8
(22) Date de dépôt: 07.10.2020
(51) Int. Cl.: B60N 2/427, B60N 2/68

(54) **ARMATURE DE SIÈGE D'UN VÉHICULE AUTOMOBILE ET SIÈGE DE VÉHICULE ASSOCIÉ**
RAHMEN FÜR EINEN KRAFTFAHRZEUGSITZ UND ZUGEHÖRIGER FAHRZEUGSITZ
FRAME FOR A MOTOR VEHICLE SEAT, AND ASSOCIATED VEHICLE SEAT

(30) Priorité: 25.10.2019 FR 1911958
(43) Date de publication de la demande: 31.08.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: DUCHENE, Ludovic, 78114 MAGNY-LES-HAMEAUX (FR); HERAUD, Gilles, 92100 Boulogne Billancourt (FR); LECROISEY, Sébastien, 78180 Montigny le Bretonneux (FR); ROGER, Baptiste, 78000 VERSAILLES (FR)
(74) Mandataire: Renault Group
(86) Numéro de dépôt international: PCT/EP2020/078170
(87) Numéro de publication internationale: WO 2021/078521

(56) Documents cités:
- WO-A1-2018/069603
- DE-A1- 102009 057 880
- FR-A1- 2 917 025
- US-A1- 2004 061 364

## Description

### Domaine technique de l'invention

La présente invention concerne de manière générale les armatures de sièges, et notamment les armatures de sièges de véhicules automobiles.

Elle concerne plus particulièrement une armature de siège d'un véhicule automobile comprenant une structure d'assise et une structure de dossier, la structure de dossier comprenant au moins un gousset conçu pour fixer ladite structure de dossier à l'arrière de la structure d'assise, ledit gousset comprenant, du côté de son bord arrière, une première ouverture.

L'invention trouve une application particulièrement avantageuse pour les sièges de véhicules automobiles à réglages manuels.

Elle concerne également un siège comprenant une telle armature de siège.

### Etat de la technique

Les constructeurs automobiles développent et fabriquent actuellement des armatures de sièges souples conçues pour résister, sans se rompre ni se déchirer, à des chocs arrière à grande vitesse (crash-tests réalisés pour des vitesses de 50 km/h et 90 km/h).

Il est notamment connu du document US 10266087 une armature de siège dans laquelle la structure de dossier comprend, sur une partie inférieure arrière, une ouverture allongée. Cette ouverture permet alors une déformation des montants latéraux de la structure de dossier vers l'arrière, lors d'un choc arrière sur le véhicule. DE 102009057880 divulgue aussi une armature comprenant un gousset.

Cependant, ce type d'armature de siège n'est pas suffisamment souple, à basse vitesse (crash-tests réalisés pour des vitesses de 16 km/h et 24 km/h), pour absorber l'énergie transmise par le choc sans la transmettre à l'occupant du siège. Un mouvement de ressort peut alors se produire sur le corps de l'occupant du siège, risquant d'entraîner diverses blessures et notamment des traumatismes cervicaux (ou « *whiplash* » selon l'acronyme d'origine anglo-saxonne).

### Présentation de l'invention

La présente invention propose d'améliorer l'armature de siège afin de permettre une absorption de l'énergie transmise par un choc arrière à basse vitesse sans la restituer à l'occupant du siège.

Plus particulièrement, on propose selon l'invention une armature de siège telle que définie dans l'introduction, dans laquelle le gousset comprend en outre au moins une deuxième ouverture adjacente à la première ouverture, ladite première ouverture et ladite deuxième ouverture présentant respectivement des formes allongées selon des première direction et deuxième direction sensiblement parallèles.

Ainsi, la présence de deux ouvertures adjacentes sur le gousset, notamment grâce à leur forme et leur disposition, permet d'assurer une déformation souhaitée de l'armature de siège lors d'un choc arrière. La présence de la deuxième ouverture fragilise plus particulièrement la structure de l'armature de siège lors d'un tel choc, permettant alors à l'armature de se déformer sous l'effet de l'énergie transmise par le choc plutôt que d'observer une déformation élastique (retransmettant alors l'énergie transmise par le choc à l'occupant du siège avec risque de blessures associé).

Cette structure de gousset selon l'invention est de plus avantageuse car elle permet également d'assurer une déformation souhaitée lors d'autres types de chocs évitant également les risques de blessures pour l'occupant du siège.

D'autres caractéristiques avantageuses et non limitatives de l'armature de siège conforme à l'invention, prises individuellement ou selon toutes les combinaisons techniquement possibles, sont les suivantes :
- le gousset étant formé par une plaque dont au moins un côté situé le long du bord arrière est replié, ledit côté replié forme un bord d'extrémité pour la première ouverture et pour la deuxième ouverture ;
- ledit côté replié présente une forme plane le long du bord d'extrémité de la seconde ouverture et une forme coudée le long du bord d'extrémité de la première ouverture ;
- le coude formé par ledit côté replié le long du bord d'extrémité de la première ouverture présente un angle compris entre 140 et 160 degrés ;
- le bord d'extrémité de la première ouverture s'étend sur une longueur comprise entre 5 et 10 millimètres ;
- la deuxième ouverture présente une forme globalement triangulaire ;
- la première ouverture présente, à une extrémité opposée au bord arrière, un rétrécissement local de largeur ;
- l'écartement entre la première ouverture et la deuxième ouverture est compris entre 6 et 10 millimètres ; et
- la structure de dossier comprend un second gousset présentant deux ouvertures, les ouvertures dudit gousset et dudit second gousset étant disposées de manière symétrique par rapport à un plan de symétrie des goussets.

L'invention propose également un siège de véhicule comprenant une armature de siège telle qu'introduite précédemment et une garniture rapportée sur l'armature.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[fig.1] est une vue schématique en perspective de côté d'une armature de siège conforme à l'invention ;
[fig.2] est une vue schématique de détail de la zone II de la figure 1, sur laquelle apparaît un gousset compris dans l'armature de siège, dans un état non déformé ;
[fig.3] est une autre vue schématique de détail du gousset compris dans l'armature de siège, dans un état déformé ; et
[fig.4] est une vue schématique plane de face des ouvertures comprises dans un gousset de l'armature de siège.

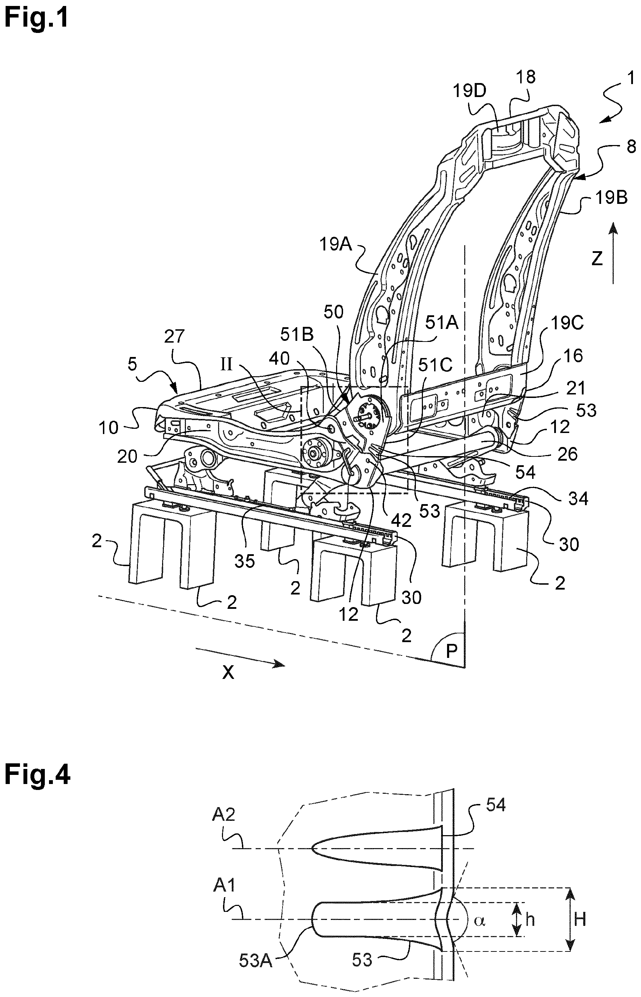

Sur la figure 1, on a représenté une armature 1 d'un siège prévu pour être installé dans l'habitacle d'un véhicule automobile (voiture, car, camion...) et pour être fixé au plancher de ce véhicule automobile.

On considèrera ici que ce véhicule automobile est une voiture qui comporte au moins un siège conducteur situé en regard d'un volant et un siège passager situé à côté du siège conducteur.

Ces deux sièges sont ici sensiblement identiques. On ne décrira alors que le siège conducteur, en considérant qu'il est situé à gauche dans l'habitacle du véhicule automobile.

Le siège décrit ici se présente sous la forme d'un fauteuil adapté à recevoir un seul occupant.

Dans la suite de la description, les termes « avant » et « arrière » seront utilisés par rapport au véhicule automobile, la partie avant d'un élément désignant la partie de cet élément qui est située du côté du capot du véhicule automobile et la partie arrière désignant la partie de cet élément qui est située du côté opposé.

Les termes « inférieur » et « supérieur » seront utilisés de la même façon, la partie inférieure d'un élément désignant la partie de cet élément qui est située du côté du plancher du véhicule automobile et la partie supérieure désignant la partie de cet élément qui est située du côté du toit du véhicule automobile.

Les termes « droite » et « gauche » sont définis en référence à l'orientation ordinaire d'un siège dans un véhicule automobile.

L'adjectif « longitudinal » s'appliquera à un objet ou une direction ou un axe orienté de l'avant vers l'arrière du véhicule automobile, parallèlement à la direction de déplacement du véhicule automobile lorsque le volant est en position neutre. Sur la figure 1, la flèche référencée X illustre une direction longitudinale.

L'armature 1 de siège comprend principalement une structure porteuse, une structure d'assise 5 et une structure de dossier 8. De manière classique, le siège comporte donc une assise et un dossier comprenant chacun respectivement la structure d'assise 5 et la structure de dossier 8, et une garniture (non représentée) rapportée sur l'armature 1 de siège. Cette garniture se présente par exemple sous la forme d'une pièce de matelassure expansée à la forme souhaitée et recouverte d'une coiffe. L'armature 1 de siège est ici métallique.

Ici, la structure porteuse est prévue pour être fixée à deux traverses du plancher du véhicule, ici représentés sous la forme de quatre pontets 2 disposés aux quatre coins d'un carré.

Comme le montre la figure 1, la structure porteuse comprend deux glissières 30 alignées selon la direction longitudinale X et équipées de moyens de fixation (ici par vissage) au plancher du véhicule. La structure d'assise 5 comprend en outre des rails 34, 35 engagés dans ces glissières 30 afin de permettre un coulissement longitudinal du siège par rapport au plancher du véhicule automobile selon la direction longitudinale X.

La structure d'assise 5 est montée sur la structure porteuse, ici à l'aide de quatre bielles. En variante, la structure d'assise pourrait être montée directement sur les glissières (sans les bielles). Dans ce cas, aucun mouvement de rehausse verticale ne serait autorisé.

La structure d'assise 5 est prévue pour être fixée de façon globalement horizontale sur le plancher du véhicule automobile. Elle s'étend donc entre une extrémité avant 10 et une extrémité arrière 12.

Plus particulièrement, comme représenté sur la figure 1, la structure d'assise 5 comprend notamment deux flasques 20, 21 latéraux, fixés ensemble au moyen d'un élément de tube arrière 26 et d'un élément de traverse avant 27.

Chaque flasque 20, 21 se présente sous la forme d'une paroi métallique emboutie et s'étend, en longueur, selon la direction longitudinale X et, en largeur, selon une direction verticale Z. En pratique, chaque flasque 20, 21 comprend une pluralité d'orifices 40, 42 conçus pour accueillir des moyens de fixation. Ces moyens de fixation permettent par exemple de fixer la structure de dossier 8 à la structure d'assise 5.

Comme le montre la figure 1, la structure de dossier 8 s'étend quant à elle globalement selon la direction verticale Z, entre une extrémité inférieure 16 et une extrémité supérieure 18. Elle comprend deux emboutis latéraux, appelés flasque gauche 19A et un flasque droit 19B, connectés ensemble à leurs deux extrémités par des éléments de traverse basse 19C et de traverse haute 19D.

En pratique, cette structure de dossier 8 est articulée, par son extrémité inférieure 16, à l'extrémité arrière 12 de la structure d'assise 5 afin de lui permettre d'avoir une inclinaison variable par rapport à la direction verticale Z. Cette inclinaison est par exemple réglée au moyen d'un mécanisme mécanique et à actionnement manuel (non décrit ici).

On s'intéressera plus particulièrement ici à la structure de dossier 8, et plus spécifiquement encore à l'élément effectuant la liaison entre la structure de dossier 8 et la structure d'assise 5.

En effet, comme le montrent les figures 1 à 3, la structure de dossier 8 comprend ici au moins un gousset 50, 60 conçu pour fixer la structure de dossier 8 à l'arrière de la structure d'assise 5. Elle en comporte ici deux, dont un gousset 50 gauche et un gousset 60 droit permettant de fixer respectivement l'extrémité gauche et l'extrémité droite de la structure de dossier 8 à la structure d'assise 5.

Chaque gousset 50, 60 se présente sous la forme d'une plaque métallique emboutie.

Chaque gousset 50, 60 fait partie intégrante de la structure de dossier 8 en étant soudé mécaniquement à une articulation 17 de la structure du dossier 8, qui est monté mobile en pivotement par rapport aux flasques droit et gauche 19A, 19B de façon à pouvoir conférer au dossier sa mobilité de basculement.

La liaison à la structure d'assise 5 est effectuée au niveau de la partie inférieure du gousset 50, 60, par exemple par vissage au travers des orifices 40, 42 du flasque 20, 21 de la structure d'assise 5. Ici, deux vis sont utilisées pour fixer chaque gousset 50, 60 sur le flasque 20, 21 correspondant de la structure d'assise 5.

Comme le montre la figure 1, l'armature 1 de siège comprend ici deux goussets 50, 60, un gousset 50 gauche et un gousset 60 droit permettant de fixer respectivement l'extrémité gauche et l'extrémité droite de la structure de dossier 8 à la structure d'assise 5.

Les deux goussets 50, 60 sont, en forme et disposition, symétriques par rapport à un plan de symétrie P (figure 1) passant par le centre des éléments de traverse. Ainsi, dans la suite, les caractéristiques d'un seul gousset 50, 60 seront décrites sans distinction de l'un ou l'autre des goussets 50, 60 en particulier (leur agencement spécifique pouvant être déduit par symétrie par rapport au plan de symétrie P).

Comme cela est représenté sur les figures 1 à 3, la plaque métallique de chaque gousset 50, 60 comprend une partie centrale 51A globalement plane, qui comporte notamment des orifices complémentaires des orifices 40, 42 du flasque 20, 21 permettant la fixation de la structure de dossier 8 sur la structure d'assise 5. La partie centrale 51A comprend également une ouverture centrale 52 destinée à accueillir le mécanisme d'inclinaison (non décrit ici) de la structure de dossier 8.

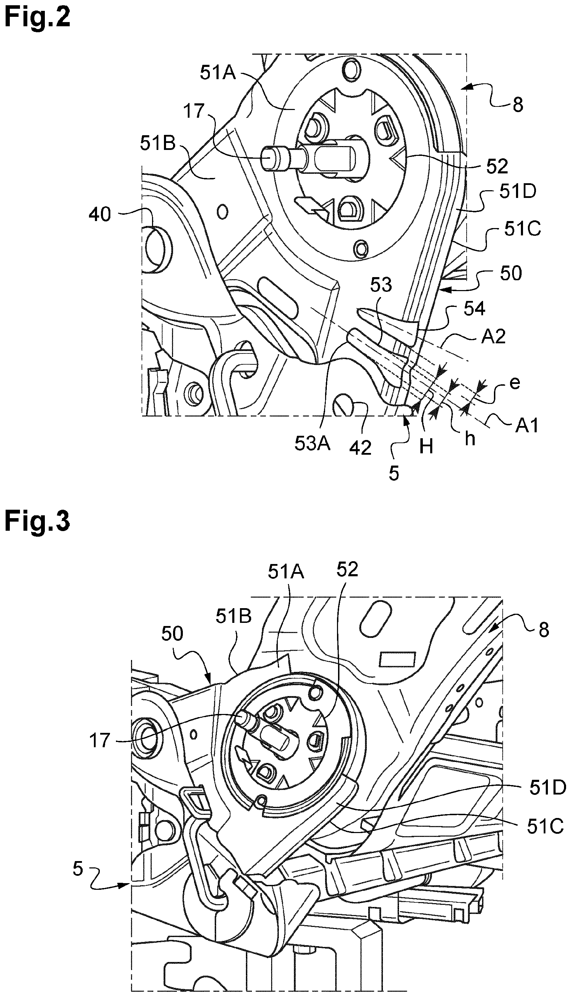

Comme le montrent plus particulièrement les figures 2 et 3, la plaque métallique formant le gousset 50, 60 présente ici, du côté de son bord arrière 51C, un côté replié 51D vers l'intérieur de l'armature 1 de siège. Elle présente en outre ici, du côté de son bord avant 51B, un autre côté replié vers l'intérieur de l'armature 1 du siège (non explicitement visible sur les figures). Chaque gousset 50, 60 présente donc globalement une forme de U, avec la partie centrale 51A correspondant à la base du U et les côtés repliés des bords avant et arrière correspondant aux bras du U.

Chaque gousset 50, 60 comprend ici, du côté de son bord arrière 51C, une première ouverture 53. Cette première ouverture 53 présente une forme allongée selon une première direction A1, ici sensiblement parallèle à la direction longitudinale X (figures 2 et 4). Dans cette description, on considère que deux directions sont sensiblement parallèles lorsque les axes associés les définissant sont inclinés d'un angle faible, par exemple inférieur à 20 degrés, de préférence inférieur à 10 degrés.

En cas de choc arrière sur le véhicule automobile à faible vitesse (par exemple inférieure à 30 km/h), cette première ouverture 53 joue le rôle d'un élément fragilisant l'armature 1 de siège lors d'un choc arrière à faible vitesse, forçant alors l'armature 1 du siège à se déformer de manière à dissiper l'énergie reçue par le choc (plutôt que de la transmettre à l'occupant du siège).

Cependant, lors d'un tel choc, le risque principal réside dans le fait que l'armature du siège munie de goussets présentant uniquement la première ouverture absorbe l'énergie transmise par le choc sans se déformer plastiquement ou se rompre et qu'elle se remette en place un fois le choc passé, restituant alors l'énergie emmagasinée à l'occupant du siège (risquant alors d'entraîner différentes blessures).

Pour limiter cette déformation élastique de l'armature 1 du siège et la transmission de l'énergie transmise par le choc arrière à l'occupant du siège, de manière avantageuse, chaque gousset 50, 60 comprend en outre au moins une deuxième ouverture 54, adjacente à la première ouverture 53 (figures 1, 2 et 4).

La première ouverture 53 et la deuxième ouverture 54 sont qualifiées d'adjacentes en ce sens qu'elles sont situées bord à bord, la distance entre les bords en regard de la première ouverture 53 et de la deuxième ouverture 54 étant faible par rapport à une dimension caractéristique du gousset (par exemple l'extension en longueur du bord arrière 51C). La première ouverture 53 et la deuxième ouverture 54 sont donc situées dans un voisinage immédiat l'une de l'autre.

En pratique, l'écartement e entre la première ouverture 53 et la deuxième ouverture 54 est compris ici entre 6 et 10 millimètres (mm). Cet écartement e est défini comme l'écartement entre les bords adjacents (c'est-à-dire les bords en regard) de la première ouverture 53 et de la deuxième ouverture 54 (figure 2).

Comme cela est représenté sur les figures 2 et 4, cette deuxième ouverture 54 présente également une forme allongée, ici selon une deuxième direction A2, également sensiblement parallèle à la direction longitudinale X. Cette deuxième direction A2 est sensiblement parallèle à la première direction A1 définissant la forme allongée de la première ouverture 53.

La première ouverture 53 et la deuxième ouverture 54 s'entendent ici sur une longueur comprise entre 10 et 15 mm.

La première ouverture 53 et la deuxième ouverture 54 débouchent sur le côté replié 51D du bord arrière 51C du gousset 50, 60. En d'autres termes, ces première et deuxième ouvertures 53, 54 sont délimitées, du côté de leurs extrémités arrière, par le côté replié 51D du bord arrière 51C du gousset 50, 60. Ce côté replié 51D forme donc un bord d'extrémité pour la première ouverture 53 et la deuxième ouverture 54.

La partie du côté replié 51D qui forme le bord d'extrémité arrière de la deuxième ouverture 54 présente une forme plane.

En revanche, la partie du côté replié 51D qui forme le bord d'extrémité arrière de la première ouverture 53 présente une forme coudée. Comme le montre la figure 4, ce coude présente deux bras qui forment ensemble un angle α, par exemple compris entre 140 et 160 degrés (à l'état non déformé). L'angle α correspond donc à une déformation, ici vers l'avant, de la partie du côté replié 51D de la première ouverture 53. Le bord d'extrémité de la première ouverture 53 s'étend sur une longueur (c'est-à-dire selon une direction sensiblement parallèle à la direction verticale Z) ici comprise entre 5 et 10 mm.

En pratique, la partie du côté replié 51D qui forme le bord d'extrémité arrière de la première ouverture 53 se présente sous la forme d'une languette pliée. La largeur de cette languette pliée est par exemple ici comprise entre 3 et 5 mm.

De manière avantageuse, cette forme coudée va permettre d'orienter la déformation de la première ouverture 53 lors d'un choc arrière sur le véhicule automobile à faible vitesse.

La deuxième ouverture 54 présente ici une forme globale de triangle isocèle. La partie du côté replié 51D qui forme le bord d'extrémité arrière de la seconde ouverture 54 forme la base de ce triangle isocèle. Cette partie s'étend sur une longueur ici comprise entre 5 et 10 mm.

En pratique, la partie du côté replié 51D qui forme le bord d'extrémité arrière de la seconde ouverture 54 se présente sous la forme d'une languette plane. La largeur de cette languette plane est par exemple ici comprise entre 3 et 6 mm.

Comme cela est visible sur la figure 2, la première ouverture 53 présente, sur une partie opposée à son bord d'extrémité arrière, un rétrécissement local de largeur. Plus précisément, l'extrémité avant 53A de la première ouverture 53 présente une largeur H. En suivant la direction longitudinale X, la largeur de la première ouverture 53 diminue localement depuis cette largeur H jusqu'à atteindre une largeur minimale h. La largeur de la première ouverture 53 augmente ensuite à nouveau jusqu'à son bord d'extrémité arrière.

De manière avantageuse, ce rétrécissement local de largeur confère alors à la première ouverture 53, au niveau de l'extrémité avant 53A, une forme de boutonnière. Cette forme de boutonnière permet alors d'accroître la fragilité du gousset en cas de choc arrière à faible vitesse afin que l'armature 1 du siège se déforme pour dissiper l'énergie emmagasinée par l'armature 1 du siège suite au choc.

Lorsque le véhicule automobile est soumis à un choc arrière à faible vitesse (par exemple pour des vitesses de l'ordre de 16 et 24 km/h), l'énergie du choc est transmise à l'armature 1 du siège. Cette énergie va entraîner une déformation au niveau de la première ouverture 53, dont le bord supérieur va alors se plier vers l'extérieur de l'armature 1 du siège suite à l'énergie transmise par le choc (figure 3). La déformation de la première ouverture 53 est orientée grâce à la présence de la languette coudée sur le bord d'extrémité 51D de la première ouverture 53.

Comme l'énergie transmise par le choc arrière à faible vitesse n'est pas suffisante pour entraîner directement l'effondrement de la deuxième ouverture 54, c'est donc la fragilité engendrée par la présence de la première ouverture 53 qui va permettre l'effondrement du gousset, déstabilisant alors l'armature 1 de siège (et entraînant donc sa déformation en dissipant l'énergie transmise par le choc arrière à faible vitesse sans incidence directe pour l'occupant du siège). De plus, comme les deux goussets 50, 60 de l'armature 1 de siège sont symétriques par rapport au plan de symétrie P, la déformation s'effectue de manière simultanée et sensiblement identique des deux côtés de l'armature 1 du siège, limitant alors le phénomène de vrillage de l'armature 1 de siège.

Lorsque le véhicule automobile est soumis à un choc arrière à grande vitesse (par exemple pour des vitesses de l'ordre de 50 et 90 km/h), l'énergie du choc est transmise à l'armature 1 du siège. Comme le montre la figure 3, en se pliant, les deux ouvertures 53 et 54 entraînent la déformation du gousset par effondrement complet sur lui-même. La présence de la deuxième ouverture 54 permet un effondrement simultané du gousset gauche et du gousset droit afin de limiter le phénomène de vrillage de l'armature 1 du siège.

Comme les deux goussets 50, 60 de l'armature 1 de siège sont symétriques par rapport au plan de symétrie P, la déformation s'effectue de manière simultanée et sensiblement identique des deux côtés de l'armature 1 du siège. Il n'y a donc pas de dissymétrie d'effondrement entre les deux côtés de l'armature 1 de siège.

La demanderesse a observé que la solution proposée par l'invention dans le cas d'un choc arrière à faible vitesse ne détériorait pas les performances du véhicule automobile dans les autres situations rencontrées (par exemple dans le cas de chocs à vitesse plus élevée).

## Revendications

1. Armature (1) de siège d'un véhicule automobile comprenant une structure d'assise (5) et une structure de dossier (8), la structure de dossier (8) comprenant au moins un gousset (50, 60) conçu pour fixer ladite structure de dossier (8) à l'arrière de la structure d'assise (5), ledit gousset (50, 60) comprenant, du côté de son bord arrière (51C), une première ouverture (53), **caractérisée en ce que** ledit gousset (50, 60) comprend en outre au moins une deuxième ouverture (54) adjacente à la première ouverture (53), ladite première ouverture (53) et ladite deuxième ouverture (54) présentant respectivement des formes allongées selon des première direction (A1) et deuxième direction (A2) sensiblement parallèles, le gousset (50, 60) étant formé par une plaque dont au moins un côté (51D) situé le long du bord arrière (51C) est replié, ledit côté replié (51D) forme un bord d'extrémité pour la première ouverture (53) et pour la deuxième ouverture (54) et **caractérisé en ce que** ledit côté replié (51D) présente une forme plane le long du bord d'extrémité de la seconde ouverture (54) et une forme coudée le long du bord d'extrémité de la première ouverture (53).

2. Armature (1) de siège selon la revendication 1, dans laquelle le coude formé par ledit côté replié (51D) le long du bord d'extrémité de la première ouverture (53) présente un angle (α) compris entre 140 et 160 degrés.

3. Armature (1) de siège selon l'une des revendications 1 à 2, dans laquelle le bord d'extrémité de la première ouverture (53) s'étend sur une longueur comprise entre 5 et 10 millimètres.

4. Armature (1) de siège selon l'une quelconque des revendications 1 à 3, dans laquelle la deuxième ouverture (54) présente une forme globalement triangulaire.

5. Armature (1) de siège selon l'une quelconque des revendications 1 à 4, dans laquelle la première ouverture (53) présente, à une extrémité opposée au bord arrière, un rétrécissement local de largeur.

6. Armature (1) de siège selon l'une quelconque des revendications 1 à 5, dans laquelle l'écartement (e) entre la première ouverture (53) et la deuxième ouverture (54) est compris entre 6 et 10 millimètres.

7. Armature (1) de siège selon l'une quelconque des revendications 1 à 6, dans laquelle, la structure de dossier (8) comprend un second gousset (60) présentant deux ouvertures, les ouvertures dudit gousset (50) et dudit second gousset (60) étant disposées de manière symétrique par rapport à un plan de symétrie (P) des goussets (50, 60).

8. Siège de véhicule automobile comprenant une armature (1) de siège selon l'une quelconque des revendications 1 à 7 et une garniture rapportée sur l'armature (1) de siège.

## Patentansprüche

1. Rahmen (1) für einen Sitz eines Kraftfahrzeugs, umfassend ein Sitzteilgestell (5) und ein Rückenlehnengestell (8), wobei das Rückenlehnengestell (8) mindestens ein Eckstück (50, 60) umfasst, das dazu ausgelegt ist, das Rückenlehnengestell (8) an der Rückseite des Sitzteilgestells (5) zu befestigen, wobei das Eckstück (50, 60) auf der Seite seines hinteren Randes (51C) eine erste Öffnung (53) umfasst, **dadurch gekennzeichnet, dass** das Eckstück (50, 60) ferner mindestens eine zweite Öffnung (54) umfasst, die zu der ersten Öffnung (53) benachbart ist, wobei die erste Öffnung (53) und die zweite Öffnung (54) jeweils längliche Formen entlang einer ersten Richtung (A1) und einer zweiten Richtung (A2), die im Wesentlichen parallel sind, aufweisen, wobei das Eckstück (50, 60) durch eine Platte gebildet wird, von der mindestens eine Seite (51D), die entlang des hinteren Randes (51C) gelegen ist, abgekantet ist, wobei die abgekantete Seite (51D) einen Endrand für die erste Öffnung (53) und für die zweite Öffnung (54) bildet, und **dadurch gekennzeichnet, dass** die abgekantete Seite (51D) eine planare Form entlang des Endrandes der zweiten Öffnung (54) und eine gekrümmte Form entlang des Endrandes der ersten Öffnung (53) aufweist.

2. Rahmen (1) für einen Sitz nach Anspruch 1, wobei die Krümmung, die durch die abgekantete Seite (51D) entlang des Endrandes der ersten Öffnung (53) gebildet wird, einen Winkel (α) zwischen 140 und 160 Grad aufweist.

3. Rahmen (1) für einen Sitz nach einem der Ansprüche 1 bis 2, wobei sich der Endrand der ersten Öffnung (53) über eine Länge zwischen 5 und 10 Millimeter erstreckt.

4. Rahmen (1) für einen Sitz nach einem der Ansprüche 1 bis 3, wobei die zweite Öffnung (54) eine insgesamt dreieckige Form aufweist.

5. Rahmen (1) für einen Sitz nach einem der Ansprüche 1 bis 4, wobei die erste Öffnung (53) an einem zu dem hinteren Rand entgegengesetzten Ende eine lokale Breitenverengung aufweist.

6. Rahmen (1) für einen Sitz nach einem der Ansprüche 1 bis 5, wobei der Abstand (e) zwischen der ersten Öffnung (53) und der zweiten Öffnung (54) zwischen 6 und 10 Millimeter beträgt.

7. Rahmen (1) für einen Sitz nach einem der Ansprüche 1 bis 6, wobei das Rückenlehnengestell (8) ein zweites Eckstück (60) umfasst, das zwei Öffnungen aufweist, wobei die Öffnungen des Eckstücks (50) und des zweiten Eckstücks (60) symmetrisch zu einer Symmetrieebene (P) der Eckstücke (50, 60) angeordnet sind.

8. Kraftfahrzeugsitz, umfassend einen Rahmen (1) für einen Sitz nach einem der Ansprüche 1 bis 7 und eine auf den Rahmen (1) für einen Sitz aufgesetzte Auflage.

## Claims

1. Motor vehicle seat frame (1) comprising a seat pan structure (5) and a backrest structure (8), the backrest structure (8) comprising at least one gusset (50, 60) designed to fasten said backrest structure (8) to the rear of the seat pan structure (5), said gusset (50, 60) comprising, on the side of its rear edge (51C), a first opening (53), **characterized in that** said gusset (50, 60) further comprises at least one second opening (54) adjacent to the first opening (53), said first opening (53) and said second opening (54) respectively having elongate shapes in a first direction (A1) and a second direction (A2) that are substantially parallel, the gusset (50, 60) being formed by a plate of which at least one side (51D) situated along the rear edge (51C) is folded, said folded side (51D) forms an end edge for the first opening (53) and for the second opening (54), and **characterized in that** said folded side (51D) has a flat shape along the end edge of the second opening (54) and a bent shape along the end edge of the first opening (53).

2. Seat frame (1) according to Claim 1, wherein the bend formed by said folded side (51D) along the end edge of the first opening (53) has an angle (α) of between 140 and 160 degrees.

3. Seat frame (1) according to either of Claims 1 and 2, wherein the end edge of the first opening (53) extends over a length of between 5 and 10 millimetres.

4. Seat frame (1) according to any one of Claims 1 to 3, wherein the second opening (54) has a generally triangular shape.

5. Seat frame (1) according to any one of Claims 1 to 4, wherein the first opening (53) has, at an end opposite the rear edge, a local narrowing of width.

6. Seat frame (1) according to any one of Claims 1 to 5, wherein the spacing (e) between the first opening (53) and the second opening (54) is between 6 and 10 millimetres.

7. Seat frame (1) according to any one of Claims 1 to 6, wherein the backrest structure (8) comprises a second gusset (60) having two openings, the openings of said gusset (50) and of said second gusset (60) being disposed symmetrically with respect to a plane of symmetry (P) of the gussets (50, 60).

8. Motor vehicle seat comprising a seat frame (1) according to any one of Claims 1 to 7 and a trim attached to the seat frame (1).
